# EUROPÄISCHE PATENTSCHRIFT

(11) **EP 0 361 100 B1**
(45) Veröffentlichungstag und Bekanntmachung des Hinweises auf die Patenterteilung: **28.12.1994**
(21) Anmeldenummer: 89115786.9
(22) Anmeldetag: 26.08.1989
(51) Int. Cl.: G02B 26/10

(54) **Vorrichtung zur zweidimensionalen Abtastung einer Oberfläche**
Device for scanning a surface in two dimensions
Dispositif pour balayer une surface en deux dimensions

(30) Priorität: 30.08.1988 DE 3829347
(43) Veröffentlichungstag der Anmeldung: 04.04.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Dumbs, Alfred, Dr., D-7800 Freiburg (DE); Grabowski, Reinhard, Dr., D-7800 Freiburg (DE); Molnar, Josef, D-7801 Umkirch (DE); Schweizer, Werner, Dr., D-7800 Freiburg (DE); Unger, Lothar, D-7835 Teningen (DE)
(74) Vertreter: Rackette, Karl, Dipl.-Phys. Dr.-Ing

(56) Entgegenhaltungen:
- EP-A- 0 273 887
- WO-A-88/04121
- DE-A- 3 044 831
- FR-A- 2 477 815
- US-A- 4 256 364
- US-A- 4 285 566
- US-A- 4 588 887
- PATENT ABSTRACTS OF JAPAN, Band 9, Nr. 20 (P-330)[1743], 26. Januar 1985 & JP-A-59 165 018
- PATENT ABSTRACTS OF JAPAN, Band 7, Nr. 38 (P-176)[1183], 16. Februar 1983 & JP-A-57 191 615

## Beschreibung

Die Erfindung betrifft eine Vorrichtung zur zweidimensionalen Abtastung einer Oberfläche mit einer beleuchtenden Lichtquelle und mit einer zwei Antriebe aufweisenden Einrichtung zur zweifachen Lichtablenkung in zwei verschiedene Ebenen und einem Detektor, wobei ein von der beleuchtenden Lichtquelle ausgesandter, mit einem Umlenkspiegel umgelenkter beleuchtender Lichtstrahl und ein zum Detektor zurückgestreuter Lichtstrahl zwischen dem Umlenkspiegel und der Einrichtung und zwischen der Einrichtung und der beleuchteten Oberfläche bezüglich ihrer Bündelachsen koaxial verlaufen.

Eine derartige Lichtablenkvorrichtung ist aus der EP-A-273 887 bekannt. Die dort beschriebene Vorrichtung ist dazu ausgelegt, daß ein beleuchtender Lichtstrahl einen Gegenstand beaufschlagt und daß reflektierte oder gestreute Strahlung koaxial zur Strahlbündelachse des beleuchtenden Lichtstrahls auf einen Detektor gelenkt wird.

Diese Vorrichtung weist den Nachteil auf, daß zwei Spiegel eingesetzt werden, deren Justierung Schwierigkeiten bereitet. Weiterhin kann die justierte Position der Spiegel über einen längeren Zeitraum nicht gewährleistet werden. Ferner ist das Gesichtsfeld der Einrichtung stark eingeschränkt.

Aus der US-A-4,256,364 ist eine Beleuchtungseinrichtung für eine zweidimensionale Struktur bekannt, bei der eine Korrektur der Verzerrung der Abbildung bzw. das Einstellen einer der Oberfläche entsprechenden Verzerrung vorgenommen wird. Diese Einrichtung umfaßt einen einzigen Drehspiegel, der über zwei Antriebe bewegt wird. Ein erster Antrieb ist raumfest angeordnet, der andere, zweite Antrieb dreht den Spiegel um eine senkrecht zu der Achse des ersten Antriebes angeordneten zweiten Achse.

Diese Vorrichtung ist nicht dafür geeignet, von der beleuchteten Oberfläche zurückgesandte Signale auf den Drehspiegel zu werfen. Dies ist auch nicht Aufgabe der US-A-4,256,364, die im wesentlichen darauf ausgerichtet ist, eine Bildebene mit im wesentlichen linearen Abtastungslinien abzufahren.

Die JP-A-57-191615 beschreibt eine elektronische Steuerung für eine kardanische Aufhängung eines Galvanometer-Drehspiegels.

Eine weitere Umlenkvorrichtung ist aus der DE-OS 32 32 953 bekannt, wobei die Drehung um die beiden sich rechtwinklig in der Spiegeloberfläche kreuzenden Drehachsen mit Hilfe von kardanischen Aufhängungen realisiert wird. Durch die Verwendung einer Vielzahl von durch Gestänge verbundenen Lagern tritt nachteiliges Spiel auf, das die Abbildungseigenschaften der Vorrichtung verschlechtert. Die beschriebene Verwendung von Galvanometerscannern zum Antrieb trifft schon bei Frequenzen von einigen Hertz auf Schwierigkeiten, da bei den vielen gegeneinander beweglichen Einzelteilen nicht harmonische, erzwungene Schwingungen auftreten. Das ungleichförmige An- und Abschwellen der Trägheitskräfte führt in Verbindung mit dem Lagerspiel zu einem ungleichförmigen Ablauf der Spiegelbewegung und dadurch zu Ungenauigkeiten in der Abbildung.

Aus der DE-A 29 20 870 ist bekannt, von einer Oberfläche ausgehende Lichtstrahlen, insbesondere Infrarotstrahlen, mit Hilfe von zwei Spiegeln um zwei Achsen auf einen Detektor abzulenken, so daß die Oberfläche zweidimensional abgetastet wird. Ein flacher Spiegel, der um eine zu seiner Spiegeloberfläche parallelen Achse kippbar ist, dient zur Abtastung in einer ersten Richtung. Eine drehbare Polygontrommel ist mit einer Anzahl von Spiegelflächen zur Abtastung in einer zur ersten Richtung rechtwinklig zweiten Richtung versehen.

Die Trommel rotiert verhältnismäßig schnell und tastet jeweils eine Zeile ab, der flache Spiegel oszilliert langsam und gestattet somit den Zeilenvorschub. Stets wird ein kleines punktförmiges Gebiet der Oberfläche auf dem Detektor abgebildet.

Durch das vorgenannte System wird die von der Oberfläche ausgehende Wärmestrahlung erfaßt. Die Bildflächenkrümmungen, die von dem flachen Spiegel, von der Spiegeltrommel und dem zugeordneten Objektivsystem erzeugt werden, verschlechtern die Bildqualität und müssen korrigiert werden.

Damit ergeben sich eine Vielzahl von Optiken, die den Aufbau der eingangs genannten Einrichtung kompliziert gestalten.

Eine andere ebenfalls mit einer Polygontrommel und einem ebenen Spiegel arbeitende Vorrichtung zur zweidimensionalen Abtastung einer Oberfläche ist aus DE-OS 28 41 777 bekannt.

In der Zeitschrift "Elektronik" 12 S.93-98 (1983) sind Einrichtungen zur Laserabstandsmessung beschrieben. Diese weisen zusätzlich zur abbildenden Optik eine kohärente Lichtquelle auf, die die abzutastende Oberfläche beleuchtet. Der in der Nähe der abzutastenden Oberfläche angeordnete Fotovervielfacher als Detektor nimmt das von der Oberfläche zurückgestreute Lichtsignal auf. Dabei ist der Detektor allerdings für die gesamte abzutastende Oberfläche sowie externe Störeinflüsse empfindlich. Dies beeinträchtigt in starker Weise seine Empfindlichkeit.

Aus der DE-B 30 44 831 ist schließlich bekannt, eine der vorgenannten Polygontrommeln in einer Lichtablenkvorrichtung so zu verwenden, daß der vom ausgesandten Laserstrahl beleuchtete Oberflächenabschnitt mit dem vom Detektor erfaßten Beleuchtungsfeld im wesentlichen übereinstimmt.

Ausgehend von diesem Stand der Technik liegt der Erfindung die Aufgabe zugrunde, eine Vorrichtung der eingangs genannten Art so fortzubilden, daß sie ein hohes, von der speziellen Anordnung der abzutastenden Oberfläche unabhängiges Signal-/Rauschverhältnis bei hohen zweidimensionalen Abtastfrequenzen aufweist.

Diese Aufgabe wird erfindungsgemäß für eine Vorrichtung mit den Merkmalen des Oberbegriffs des Anspruchs 1 dadurch gelöst, daß der beleuchtende Lichtstrahl die reflektierende Oberfläche eines einzigen Spiegels der Lichtablenkeinrichtung in einem festen Raumpunkt trifft, in dem sich deren erste Drehachse mit ihrer zweiten Drehachse im wesentlichen rechtwinklig kreuzt, wobei eine Drehung des Spiegels um die erste Drehachse mit Hilfe des ersten Antriebs und um die zweite Drehachse mit Hilfe des zweiten Antriebs den festen Raumpunkt in der reflektierenden Oberfläche des Spiegels beläßt und den beleuchtenden Lichtstrahl zweidimensional über die abzutastende Oberfläche führt sowie den von der abzutastenden Oberfläche von verschiedenen Stellen zurückgestreuten Lichtstrahl koaxial zu der Bündelachse umlenkt, die mit der ersten Drehachse übereinstimmt, daß der erste Antrieb raumfest angeordnet ist, daß der zweite Antrieb um die erste Drehachse verkippbar angeordnet ist und daß der schnelle Schwingungen um die zweite Drehachse erzeugende zweite Antrieb ein Galvanometer-Versteller ist.

Dadurch, daß die erste Drehachse mit der Bündelachse übereinstimmt, ist der zweite Antrieb um die erste Drehachse in einer solchen und zudem sehr präzisen Weise verkippbar, daß eine stabile reproduzierbare Abtastung einer beliebigen Oberfläche erreicht werden kann. Durch die Verwendung eines Galvanometer-Verstellers, mit dem schnelle Schwingungen um die zweite Drehachse erzeugbar sind, ist eine reproduzierbare, schnelle zweidimensionale Abtastung einer Szene möglich. Der erste, raumfeste Antrieb dreht den zweiten Antrieb und das zugehörige Antriebsgestänge in einer langsamen Schwingung um die erste Drehachse. Der zweite Antrieb, dessen zweite Drehachse um die erste Drehachse mitkippt, gestattet das Ausführen von Schwingungen des leichten, einzigen Spiegels um die zweite Drehachse mit einer hohen Frequenz. Dadurch wird eine Szene schnell zeilenweise abgetastet, während der Zeilenvorschub durch den langsamen ersten Antrieb gewährleistet wird.

Es sind lediglich zwei Lagerpaare erforderlich, von denen eines mit dem Lagerpaar eines der beiden Antriebe identisch ist.

Bei Verwendung eines kreisförmigen, dünnen Spiegels, der auf einem einseitig eingespannten Drehstab des Galvanometer-Verstellers befestigt ist, wobei eine Gerade in der Spiegeloberfläche im wesentlichen mit der zweiten Drehachse übereinstimmt, liegt ein sehr geringes Trägheitsmoment vor, das eine hohe Schwingfrequenz von mehreren 100 Hertz für die Kippschwingungen um die zweite Drehachse gestattet.

Bei der Verwendung eines Resonanz-Galvanometer-Verstellers entsteht in Einheit mit dem verwendeten Spiegel eine harmonische erzwungene Schwingbewegung, die sicher reproduzierbar ist.

Die Anordnung eines Photodetektors im Bereich des Abtastkegels eines beleuchtenden Strahls gestattet die einfache Synchronisierung aufeinanderfolgender Abtastungen der Szene.

Weitere Ausgestaltungen der Erfindung sind Gegenstand der Unteransprüche.

Nachfolgend werden drei Ausführungsbeispiele der Erfindung anhand der Zeichnung näher erläutert. Es zeigen:
- Fig. 1: die schematische perspektivische Seitenansicht einer Vorrichtung zur optischen Abtastung einer Szene gemäß einem ersten Ausführungsbeispiel,
- Fig. 2: eine ebene abzutastende Oberfläche mit dem Mittelstrahl des die Oberfläche beleuchtenden Lichtstrahls und
- Fig. 3: eine Seitenansicht eines Planspiegels der Vorrichtung zur optischen Abtastung einer Szene,
- Fig. 4: eine Draufsicht auf den Planspiegel nach Figur 3,
- Fig. 5: die schematische perspektivische Ansicht eines Antriebs einer Spiegelhalterung der Vorrichtung zur Abtastung einer Szene gemäß einem zweiten Ausführungsbeispiel und
- Fig. 6: die schematische perspektivische Ansicht eines Antriebs einer Spiegelhalterung der Vorrichtung zur Abtastung einer Szene gemäß einem dritten Ausführungsbeispiel.

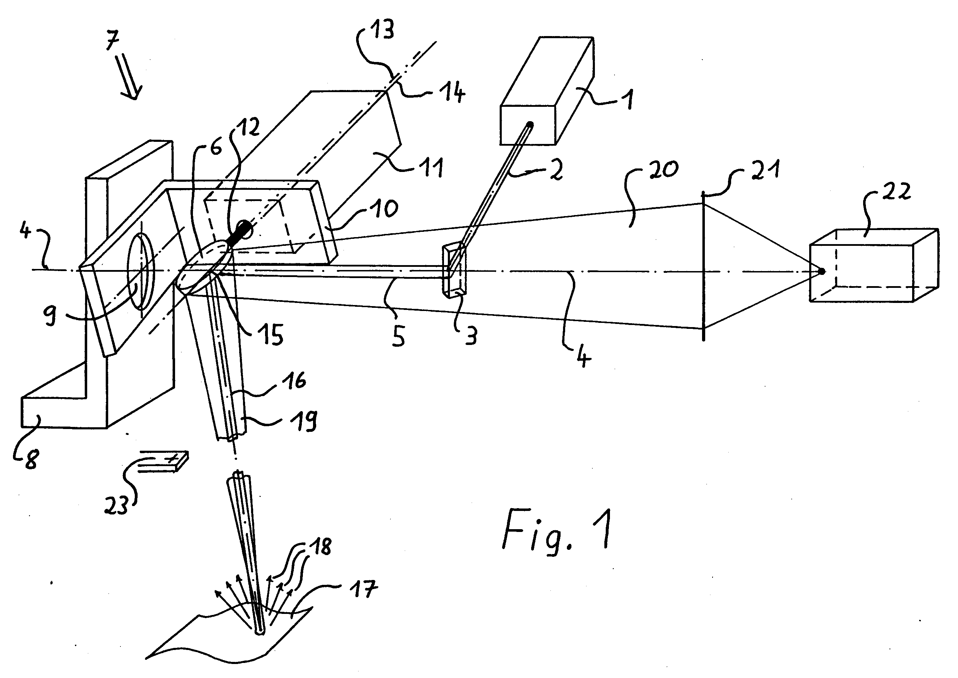

Die Figur 1 zeigt schematisch in einer perspektivischen Seitenansicht eine Vorrichtung zur optischen Abtastung einer Szene gemäß einem ersten Ausführungsbeispiel der Erfindung.

Die Vorrichtung verfügt über einen Laser 1 als Strahlungsquelle. Der raumfeste Laser 1, dem eine nicht gezeichnete Umlenk-, Aufweitungs- oder Justieroptik oder eine optische Diode vorgeschaltet sein kann, sendet einen schmalen Laserstrahl 2 aus, der einen kleinen, ortsfesten, aber justierbaren Einkoppelspiegel 3 in seinem Schnittpunkt mit einer optischen Achse 4 beaufschlagt. Der Einkoppelspiegel 3 verfügt über eine möglichst kleine, den schmalen Laserstrahl 2 gerade noch in seiner Gänze reflektierende Oberfläche.

Mit Hilfe des justierbaren Einkoppelspiegels 3 wird der schmale Laserstrahl 2 in einen umgelenkten Laserstrahl 5 abgelenkt. Der umgelenkte Laserstrahl 5 erstreckt sich fluchtend mit der raumfesten optischen Achse 4 und beaufschlagt einen Planspiegel 6 einer Umlenkmechanik 7.

Die Umlenkmechanik 7 verfügt über eine Grundplatte 8, die eine Öffnung 9 aufweist. Die Grundplatte 8 ist raumfest derart angeordnet, daß sich die Öffnung 9 konzentrisch um die optische Achse 4 erstreckt. Die Öffnung 9 dient der Aufnahme eines nicht dargestellten, ebenfalls konzentrisch zur optischen Achse 4 angeordneten Lagers für eine Winkelhalterung 10. In die Öffnung 9 ist vorzugsweise ein in der Zeichnung nicht dargestelltes Fadenkreuz zentrisch angeordnet, das der Justage des aus der Grundplatte 8 und dem umgelenkten Laserstrahl 5 des Lasers 1 bestehenden Aufbaus mit Hilfe des Einkoppelspiegels 3 und even tuell weiterer nicht gezeichneter Hilfsoptiken auf die optische Achse 4 dient.

Die Winkelhalterung 10 ist drehbar um die optische Achse 4 gelagert. Der zur gesteuerten Rotationsbewegung der Winkelhalterung 10 und der daran befestigten weiteren Teile der Umlenkmechanik 7 benötigte, mit der Grundplatte 8 raumfest angeordnete Antrieb wie z.B. ein elektromotorisch angetriebener Exzenter, ist mit seiner mechanischen Ankopplung an die Winkelhalterung 10 der Übersichtlichkeit halber nicht gezeichnet. Die Exzenterscheibe verfügt über einen parallel zur Exzenterachse angeordneten Stift, der in einen Langschlitz der Winkelhalterung 10 eingreift. Bei einer Drehung der Exzenterscheibe um ihre Achse gleitet der Stift in dem Langschlitz der Winkelhalterung 10 und zwingt dieses somit zu Kippschwingungen.

An der Winkelhalterung 10 ist ein Galvanometer-Versteller 11 befestigt, der über einen Drehstab 12 verfügt, der sich bei der elektrischen Ansteuerung des Galvanometer-Verstellers 11 um seine Drehachse 13 dreht. Ein auf den Galvanometer-Versteller 11 gegebenes sinusförmiges Ansteuersignal bewirkt eine sinusförmige Verstellung des Drehstabes 12 aus seiner Ruhelage um seine Drehachse 13.

In der axialen Verlängerung des Drehstabes 12 ist der Planspiegel 6 befestigt. Der Planspiegel ist vorzugsweise möglichst dünn ausgestaltet. Dies bezweckt einerseits, daß das durch den Galvanometer-Versteller 11 über den Drehstab 12 in eine Drehung zu versetzende Gewicht des Planspiegels 6 und damit sein Trägheitsmoment klein ist. Andererseits existiert dann eine Spiegelachse 14 in der reflektierenden Oberfläche des Planspiegels 6, die nahe an der Drehachse 13 liegt und die näherungsweise der Achse der reflektierenden Oberfläche des Planspiegels 6 entspricht, über die der Planspiegel 6 bei Drehungen desselben um die Drehachse 13 mit kleinen Amplituden hin und her kippt.

Der Galvanometer-Versteller 11 ist insbesondere derart an der Winkelhalterung 10 befestigt, daß die Spiegelachse 14 die optische Achse 4 in einem Raumpunkt 15 kreuzt, der bei der Drehung der Winkelhalterung 10 um die optische Achse 4 raumfest bleibt. Durch den dünnen Planspiegel 6 und dessen Anordnung verbleibt der Raumpunkt 15 auch bei kleinen Drehungen des Planspiegels 6 um die Drehachse 13 raumfest.

Der Planspiegel 6 kann aber auch vorzugsweise asymmetrisch bezüglich der Drehachse 13 so auf dem Drehstab 12 befestigt werden, daß seine Spiegelachse 14 mit der Drehachse 13 zusammenfällt. Dann bleibt der Raumpunkt 15 auch bei größeren Drehungen des Planspiegels 6 um die Drehachse 13 raumfest.

Im bevorzugten Ausführungsbeispiel ist der Planspiegel 6 kreisförmig ausgestaltet, weist einen Durchmesser von ungefähr fünf Zentimetern auf und die Spiegelachse 14 des Planspiegels 6 koinzidiert mit der Drehachse 13 des Galvanometer-Verstellers 11. Diese Anordnung gestattet Schwingfrequenzen des Planspiegels 6 um die Drehachse 13 von über 100 Hz.

Der umgelenkte Laserstrahl 5 des Lasers 1 trifft im Raumpunkt 15 auf die reflektierende Oberfläche des Planspiegels 6 und wird von dem Planspiegel 6 in einen beleuchtenden Strahl 16 umgelenkt.

Der beleuchtende Strahl 16 trifft auf eine abzutastende Oberfläche 17 und wird von dieser in einen Rückstrahl 18 reflektiert und zurückgestreut. Der Abstand zwischen der Umlenkmechanik 7 und der abzutastenden Oberfläche liegt in der Größenordnung von zwei Metern.

Der reflektierte und zurückgestreute Rückstrahl 18 weist insbesondere einen Bildstrahl 19 auf, der sich mit einem kleinen Öffnungswinkel konzentrisch um den beleuchtenden Strahl 16 erstreckt. Der Bildstrahl 19 wird von dem Planspiegel 6 der Umlenkmechanik 7 in einen divergierenden Strahl 20 umgelenkt, dessen Mittenstrahl auf der optischen Achse 4 liegt. Der halbe Öffnungswinkel des Bildstrahles 19 bei der bevorzugten Ausführungsform liegt in der Größenordnung von 1 Grad.

Der sich im wesentlichen fluchtend zur optischen Achse 4 erstreckende divergierende Strahl 20 wird von einer Sammellinse 21 auf einen Detektor 22 abgebildet. Der Detektor 22 ist mit seiner lichtempfindlichen Oberfläche ebenfalls symmetrisch um die optische Achse 4 angeordnet. Der sehr kleine Einkoppelspiegel 3 blendet nur einen kleinen Teil des divergierenden Strahles 20 aus. Die Sammellinse 21 ist kurzbrennweitig.

Der schmale Laserstrahl 2, der auf den Einkoppelspiegel 3 fällt, ist auf einen solchen Durchmesser aufgeweitet, daß der Durchmesser des divergierenden Strahles 20 an der Sammellinse 21 nach der auf der zum Detektor 22 durchlaufenden Strecke nicht zu sehr anwächst.

Weiterhin kann in der Einrichtung zur Abtastung einer Oberfläche ein Photodetektor 23 vorgesehen sein, der am Rande der abzutastenden Oberfläche 17 so angeordnet ist, das er in einem vorbestimmten Zeitpunkt bei der Abtastung von dem beleuchtenden Strahl 16 überstrichen wird.

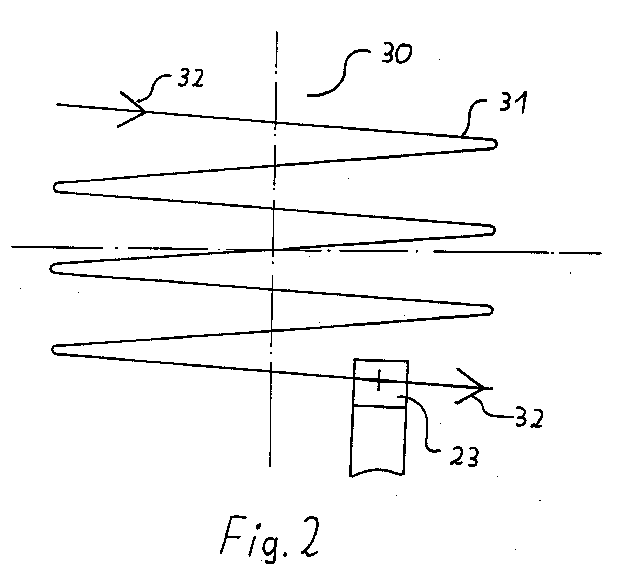

Die Figur 2 zeigt eine ebene abzutastende Oberfläche 30 mit dem Mittelstrahl 31 des die Oberfläche beleuchtenden Strahles 16 während einer Abtastung. Die ebene abzutastende Oberfläche 30 ist ein einfacher Spezialfall der abzutastenden Oberfläche 17. Durch die Schwingungen des Planspiegels 6 um die Drehachse 13 und der Drehung des Planspiegels 6 um die optische Achse 4, die gleichzeitig die mechanische Achse der Winkelhalterung 10 ist, wird der Mittelstrahl 31 des beleuchtenden Strahles 16 in der gezeichneten Weise über die Oberfläche 30 geführt. Dabei deuten die Pfeile 32 die Bewegungsrichtung des Mittelstrahls 31 an.

In Figur 2 sind eine konstante Drehbewegung des Planspiegels 6 um die optische Achse 4 und etwas mehr als drei ganze Perioden der schnellen Schwingungen um die Drehachse 13 dargestellt.

Während der Bewegung des Mittelstrahls 31 überstreicht dieser den eventuell im Strahlengang angeordneten Photodetektor 23, der sich in der Figur 2 oberhalb der ebenen Oberfläche 30 befindet. Er gestattet in einfacher Weise die Lage des beleuchtenden Strahl 16 relativ zur ebenen abzutastenden Oberfläche 30 oder zur abzutastenden Oberfläche 17 allgemein herzustellen. Bei z.B. durch Quarzansteuerung genau bekanntem zeitlichem Ablauf der Bewegungen um die optische Achse 4 und die Drehachse 13 ist die Zuordnung von vom Detektor 22 empfangenen Meßsignalen durch den divergierenden Strahl 20 und Oberflächenelementen der abzutastenden Oberfläche 17 in einfacher Weise gegeben.

Andernfalls ist diese Zuordnung z.B. über jeweils einen Winkelgeber für die Drehachse 13 und die der optischen Achse 4 entsprechenden mechanischen Achse der Winkelhalterung 10 zu erreichen.

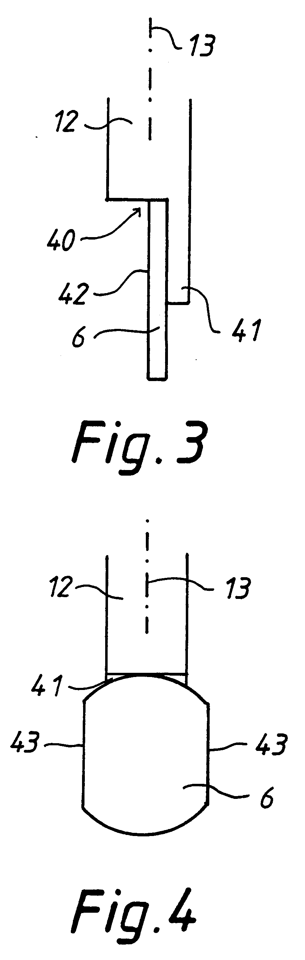

Die Figur 3 stellt eine Seitenansicht des Planspiegels 6 einer Vorrichtung zur optischen Abtastung einer Szene dar. Der Planspiegel 6 ist auf dem Drehstab 12 des Galvanometer-Verstellers 11 befestigt, vorzugsweise geklebt. Der Drehstab 12 rotiert durch die Antriebswirkung des Galvanometer-Verstellers 11 um seine Symmetrie- und Drehachse 13.

Der zylindrische Drehstab 12 weist an seinem spiegelseitigen Ende eine Ausnehmung 40 auf, so daß der Drehstab 12 als ein schmaler Steg 41 in Gestalt eines Zylindersegmentes ausläuft. Insbesondere ist die Dicke des Stegs 41 kleiner als der Radius des Zylinders des Drehstabes 12.

Der Planspiegel 6 ist auf dem Steg 41 des Drehstabes 12 derart befestigt, daß die Drehachse 13 in der Ebene der Oberfläche 42 des Planspiegels 6 liegt. Bei einer Verkippung des Planspiegels 6 um die Drehachse 13 bleibt dementsprechend die entlang der Achse 13 verlaufende Gerade in der Oberfläche 42 des Spiegels 6 raumfest.

Die Figur 4 zeigt eine Draufsicht auf den Planspiegel 6 nach Figur 3, der auf dem Steg 41 des Drehstabes 12 befestigt ist. Vorteilhafterweise sind Segmente aus dem Zylinder des Planspiegels 6 herausgeschnitten, die durch Sekanten 43 begrenzt sind, die sich parallel zu der Drehachse 13 erstrecken. Dadurch verkleinert sich die Größe der Oberfläche 42 des Planspiegels 6 nur wenig; das Trägheitsmoment des Planspiegels 6 verkleinert sich durch die Wegnahme von drehachsenfernem Material beträchtlich. Ein üblicher Galvanometer-Versteller 11 kann ohne weiteres einen Planspiegel 6 mit einem Durchmesser von 5 Zentimetern und mehr in eine schnelle harmonische Schwingung mit einer Frequenz von mehreren 100 Hertz versetzen.

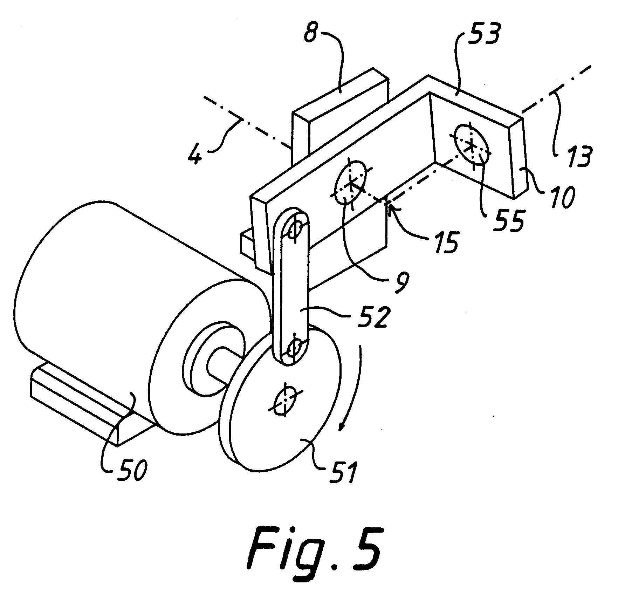

Die Figur 5 stellt eine schematische perspektivische Seitenansicht eines Antriebs einer Spiegelhalterung der Vorrichtung zur Abtastung einer Szene gemäß einem zweiten Ausführungsbeispiel dar.

Ein raumfest angeordneter Motor 50 dreht langsam ein Übertragungsrad 51, an dem eine Pleuelstange 52 umkreisnah befestigt ist. Die Winkelhalterung 10 ist mit dem motorfernen Ende der Pleuelstange 52 verbunden. Die Winkelhalterung 10 ist um die Öffnung 9 verschwenkbar an der raumfesten Grundplatte 8 befestigt. Die Öffnung 9 erstreckt sich konzentrisch um die optische Achse 4. Die Winkelhalterung 10 verfügt über ein rechtwinklig zu der optischen Achse 4 verlaufendes Teilstück 53 mit einer Öffnung 55, die sich konzentrisch um die Achse 13 des in der Figur 5 nicht dargestellten Galvanometer-Verstellers 11 erstreckt. Die Achsen 4 und 13 treffen sich in einem bei Verkippungen ortsfest bleibenden Kreuzungspunkt, dem Raumpunkt 15.

Durch den raumfesten Motor 50 wird die Winkelhalterung 10 in eine relativ langsame Hin-und-Herbewegung um die optische Achse 4 versetzt, die den an der Winkelhalterung 10 befestigten nicht-raumfesten Galvanometer-Versteller 11 mitnimmt. Letzterer dreht den Planspiegel 6 in schnellen Schwingungen kleine Winkel um die Drehachse 13. Die schon erwähnte, mit der Drehachse 13 fluchtende Gerade in der Oberfläche 42 des Planspiegels 6 schneidet die optische Achse 4. dadurch entsteht der bei Bewegung des Planspiegels 6 ortsfeste Raumpunkt 15 in der Oberfläche 42 des Planspiegels 6.

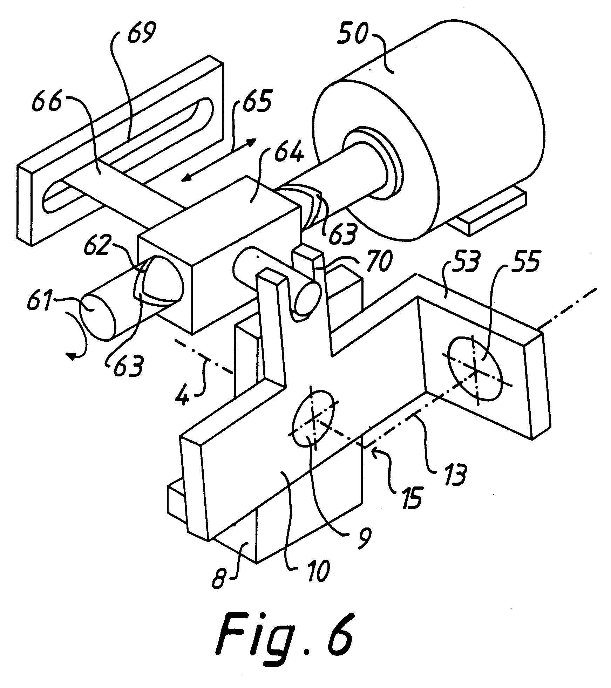

Die Figur 6 zeigt eine schematische perspektivische Seitenansicht eines Antriebs einer Spiegelhalterung der Vorrichtung zur Abtastung einer Szene gemäß einem dritten Ausführungsbeispiel.

Der raumfest angeordnete Motor 50 dreht langsam eine Reversierspindel 61. Die Reversierspindel 61 verfügt über einen einzigen Gewindegang 62, der an zwei gegenüberliegenden Stellen Umkehrpunkte 63 aufweist. Um die Reversierspindel 61 herum ist eine Mutter 64 mit einem in der Zeichnung nicht dargestellten inneren Stift angeordnet, der in den Gewindegang 62 eingreift. Bei einer Drehung der Reversierspindel 61 bewegt sich die Mutter 64 in einer Hin-und-Herbewegung entlang dem Doppelpfeil 65.

An der Mutter 64 sind seitlich zwei quer verlaufende Lagerstangen 66 und 67 befestigt. Die Lagerstange 66 greift in einen raumfest angeordneten Langschlitz 69 ein, dessen Schlitz in Richtung des Doppelpfeils 65 und damit der Achse der Reversierspindel 61 ausgerichtet ist. Die Lagerstange 67 greift in eine Ausnehmung 70 ein, die in einem Ansatz 71 auf der Winkelhalterung 10 vorgesehen ist. Die Winkelhalterung 10 ist wiederum um die Öffnung 9 verschwenkbar an der raumfesten Grundplatte 8 befestigt. Die Öffnung 9 verläuft konzentrisch zur optischen Achse 4. Der Ansatz 71 ist vorteilhafterweise in Verlängerung oberhalb oder unterhalb der in der Winkelhalterung 10 vorgesehenen Öffnung 9 angeordnet.

Die Winkelhalterung 10 verfügt über das rechtwinklig zu der optischen Achse 4 verlaufende Teilstück 53 mit einer Öffnung 55, die sich konzentrisch um die Achse 13 des in der Zeichnung nicht dargestellten Galvanometer-Verstellers 11 erstreckt.

Der in der Figur 6 nicht dargestellte Planspiegel 6 wird von dem Motor 50 und dem Galvanometer-Versteller 11 in analoger Weise zu den vorherigen Ausführungsbeispielen in zwei aufeinander rechtwinklig stehenden Richtungen um den festen Raumpunkt 15 verkippt.

Die Spiegelhalterung vermittelt damit die gleiche Reflektion des umgelenkten Strahles 5 in den beleuchtenden Strahl 16, sowie den zurückverlaufenden Strahlengang zum Detektor 22 wie das erste Ausführungsbeispiel, so daß auf die weiteren Merkmale des ersten Ausführungsbeispiels verwiesen wird.

Die Justage der optischen Achse 4 wird in allen Fällen dadurch erleichtert, daß bei einem rechten Winkel zwischen Drehachse 13 und der optischen Achse 4 sowie justiertem Planspiegel 6 der umgelenkte Laserstrahl 5 auf die Oberfläche 42 des Planspiegels 6 streifend einfällt, was durch die Öffnung 9 hindurch einfach beobachtet werden kann.

Vorteilhafterweise wird der Galvanometer-Versteller 11 fern von seiner Resonanzfrequenz betrieben, da sich dann seine Phasenlage bei Störungen nur unwesentlich ändert. Es reicht dann die Aufnahme eines einzigen Synchronisationspulses über den Photodetektor 23, um aus einer Zeitmessung die genaue Lage des ruckfrei abgetasteten Abtastpunktes zu errechnen. Damit kann eine Ortsauflösung von einem Millimeter bei einer Größe der abgetasteten Szene von 50 mal 50 Zentimeter erreicht werden. In einer anderen Ausgestaltung kann auch die an üblichen Galvanometer-Verstellern 11 abgreifbare Winkelinformation direkt verarbeitet werden.

Die beschriebene Vorrichtung kann wirkungsvoll für die Helligkeitsabtastung einer Oberfläche, für die Entfernungsmessung über ein Phasenmessverfahren oder die direkte Laufzeitentfernungsmessung eingesetzt werden.

## Patentansprüche

1. Vorrichtung zur zweidimensionalen Abtastung einer Oberfläche (17) mit einer beleuchtenden Lichtquelle (1) und mit einer zwei Antriebe (11;50) aufweisenden Einrichtung (7) zur zweifachen Lichtablenkung in zwei verschiedene Ebenen und einem Detektor (22), wobei ein von der beleuchtenden Lichtquelle (1) ausgesandter, mit einem Umlenkspiegel (3) umgelenkter beleuchtender Lichtstrahl (5) und ein zum Detektor (22) zurückgestreuter Lichtstrahl (20) zwischen dem Umlenkspiegel (3) und der Einrichtung (7) und zwischen der Einrichtung (7) und der beleuchteten Oberfläche (17) bezüglich ihrer Bündelachsen (4) koaxial verlaufen, **dadurch gekenn****zeichnet**, daß der beleuchtende Lichtstrahl (5) die reflektierende Oberfläche eines einzigen Spiegels (6) der Lichtablenkeinrichtung (7) in einem festen Raumpunkt (15) trifft, in dem sich deren erste Drehachse (4) mit ihrer zweiten Drehachse (13) im wesentlichen rechtwinklig kreuzt, wobei eine Drehung des Spiegels (6) um die erste Drehachse (4) mit Hilfe des ersten Antriebs (50) und um die zweite Drehachse (13) mit Hilfe des zweiten Antriebs (11) den festen Raumpunkt (15) in der reflektierenden Oberfläche des Spiegels (6) beläßt und den beleuchtenden Lichtstrahl (5) zweidimensional über die abzutastende Oberfläche (17) führt sowie den von der abzutastenden Oberfläche (17) von verschiedenen Stellen zurückgestreuten Lichtstrahl (20) koaxial zu der Bündelachse (4) umlenkt, die mit der ersten Drehachse (4) übereinstimmt, daß der erste Antrieb (50) raumfest angeordnet ist, daß der zweite Antrieb (11) um die erste Drehachse (4) verkippbar angeordnet ist und daß der schnelle Schwingungen um die zweite Drehachse (13) erzeugende zweite Antrieb (11) ein Galvanometer-Versteller (11) ist.

2. Vorrichtung nach Anspruch 1, dadurch gekennzeichnet, daß die Lichtquelle (1) ein Laser ist und daß der einzige Spiegel (6) nur für den Wellenlängenbereich um die Wellenlänge des ausgesandten Laserlichtes hochreflektierend ist.

3. Vorrichtung nach einem der vorstehenden Ansprüche 1 oder 2, dadurch gekennzeichnet, daß der Spiegel (6) kreisförmig gestaltet ist und eine möglichst geringe Dicke aufweist.

4. Vorrichtung nach Anspruch 3, dadurch gekennzeichnet, daß der einzige Spiegel (6) auf einem einseitig eingespannten Drehstab (12) des Galvanometer-Verstellers (11) befestigt ist, wobei eine Gerade in der Spiegeloberfläche (42) im wesentlichen mit der zweiten Drehachse (13) übereinstimmt.

5. Vorrichtung nach Anspruch 4, dadurch gekennzeichnet, daß drehachsenferne Segmente aus dem Spiegel (6) herausgeschnitten sind, die durch sich parallel zu der zweiten Drehachse (13) erstreckende Sekanten (43) begrenzt sind.

6. Vorrichtung nach einem der vorstehenden Ansprüche 1 bis 5, dadurch gekennzeichnet, daß ein Photodetektor (23) im Bereich des Abtastkegels des beleuchtenden Strahls (16) angeordnet ist, so daß er bei jeder zweidimensionalen Abtastung einmal von dem beleuchtenden Lichtstrahl (16) überstrichen wird, und daß aus dem im Photodetektor (23) erzeugten Signal die zeitliche und räumliche Zuordnung der vom Detektor (22) aufgenommenen Signale mit der abgetasteten Oberfläche (17) errechnet wird.

7. Vorrichtung nach einem der vorstehenden Ansprüche 1 bis 5, dadurch gekennzeichnet, daß zwei Winkelgeber vorgesehen sind, durch die zu jedem Zeitpunkt der zweidimensionalen Abtastung die zeitliche und räumliche Zuordnung der vom Detektor (22) aufgenommenen Signale mit der abgetasteten Oberfläche (17) ermittelbar ist.

8. Vorrichtung nach einem der vorstehenden Ansprüche, dadurch gekennzeichnet, daß der Galvanometer-Versteller (11) ein Resonanz-Galvanometer-Versteller ist.

## Claims

1. Apparatus for two-dimensional scanning of a surface (17) comprising an illuminating light source (1) and a means (7) having two drives (11; 50) for double light deflection into two different planes and a detector (22), wherein an illuminating light beam (5) which is emitted by the illuminating light source (1) and which is diverted by a diverting mirror (3) and a light beam (20) which is scattered back to the detector (22) extend coaxially in respect of their beam axes (4) between the diverting mirror (3) and the means (7) and between the means (7) and the illuminated surface (17), characterised in that the illuminating light beam (5) meets the reflecting surface of a single mirror (6) of the light deflection means (7) at a fixed point (15) in space at which the first axis of rotation (4) thereof intersects with the second axis of rotation (13) thereof substantially at a right angle, wherein a rotary movement of the mirror (6) about the first axis of rotation (4) by means of the first drive (50) and about the second axis of rotation (13) by means of the second drive (11) leaves the fixed point (15) in the reflecting surface of the mirror (6) and two-dimensionally guides the illuminating light beam (5) over the surface (17) to be scanned and diverts the light beam (20) which is scattered back from various locations from the surface (17) to be scanned, coaxially with respect to the bean axis (4) which coincides with the first axis of rotation (4), that the first drive (50) is arranged fixedly in space, that the second drive (11) is arranged tiltably about the first axis of rotation (4), and that the second drive (11) which produces rapid oscillations about the second axis of rotation (13) is a galvanometer displacement means (11).

2. An apparatus according to claim 1 characterised in that the light source (1) is a laser and that the single mirror (6) is highly reflective only for the wavelength range around the wavelength of the emitted laser light.

3. An apparatus according to one of preceding claims 1 and 2 characterised in that the mirror (6) is of a circular configuration and is of the smallest possible thickness.

4. An apparatus according to claim 3 characterised in that the single mirror (6) is fixed on a rotary bar (12), which is gripped at one end, of the galvanometer displacement means (11), wherein a straight line in the mirror surface (42) substantially coincides with the second axis of rotation (13).

5. An apparatus according to claim 4 characterised in that segments which are remote from the axis of rotation are cut out of the mirror (6) and are delimited by secants (43) extending parallel to the second axis of rotation (13).

6. An apparatus according to one of preceding claims 1 to 5 characterised in that a photodetector (23) is arranged in the region of the scanning cone of the illuminating beam (16) so that the illuminating beam (16) passes over it once in each two-dimensional scanning operation and that the association in respect of time and space of the signals picked up by the detector (22) with the scanned surface (17) is calculated from the signal produced in the photodetector (23).

7. An apparatus according to one of preceding claims 1 to 5 characterised in that there are provided two angle sensors for ascertaining the association in respect of time and space of the signals picked up by the detector (22) with the scanned surface (17), at each moment in time in the two-dimensional scanning operation.

8. An apparatus according to one of the preceding claims characterised in that the galvanometer displacement means (11) is a resonance galvanometer displacement means.

## Revendications

1. Dispositif pour effectuer un balayage en deux dimensions d'une surface (17), comprenant une source lumineuse d'éclairage (1), un dispositif comportant deux entraînements (11; 50) pour déterminer une double déviation de la lumière dans deux plans différents et un détecteur (22), un rayon lumineux d'éclairage (5) envoyé par la source lumineuse d'éclairage (1) et dévié par un miroir déflecteur (3) et un rayon lumineux (20) rétrodiffusé vers le détecteur (22) entre le miroir déflecteur (3) et le dispositif (7) et entre le dispositif (7) et la surface éclairée (17) s'étendant coaxialement par rapport à leurs axes de faisceau (4), caractérisé en ce que le rayon lumineux d'éclairage (5) parvient sur la surface réfléchissante d'un unique miroir (6) du dispositif déflecteur de lumière (7) en un point fixe dans l'espace (15), son premier axe de rotation (4) se croisant sensiblement à angle droit avec son second axe de rotation (13), une rotation du miroir (6) autour du premier axe de rotation (4) à l'aide du premier entraînement (50) et autour du second axe de rotation (13) à l'aide du second entraînement (11) s'écartant du point fixe (15) sur la surface réfléchissante du miroir (6) et guidant le rayon lumineux d'éclairage (5) dans les deux dimensions sur la surface à balayer (17) et renvoyant le rayon lumineux (20) rétrodiffusé à partir de divers endroits de la surface balayée (17) coaxialement à l'axe (4) du faisceau qui coïncide avec le premier axe de rotation (4), et en ce que le premier entraînement (50) est fixe, le second entraînement (11) peut être basculé autour du premier axe de rotation (4) et le second entraînement qui provoque des oscillations rapides autour du second axe de rotation (13) est un régulateur galvanométrique (11).

2. Dispositif selon la revendication 1, caractérisé en ce que la source lumineuse (1) est un laser et en ce que l'unique miroir (6) n'est fortement réfléchissant que pour la plage des longueurs d'onde situées autour de la longueur d'onde de la lumière laser émise.

3. Dispositif selon l'une quelconque des revendications précédentes 1 ou 2, caractérisé en ce que le miroir (6) est de forme circulaire et en ce que son épaisseur est aussi faible que possible.

4. Dispositif selon la revendication 3, caractérisé en ce que l'unique miroir (6) est fixé sur une barre rotative (12) serrée par un côté du régulateur galvanométrique (11), une droite passant sur la surface du miroir (42) étant sensiblement en coïncidence avec le second axe de rotation (13).

5. Dispositif selon la revendication 4, caractérisé en ce que des segments éloignés de l'axe de rotation sont découpés du miroir (6), et sont limités par des sécantes (43) s'étendant parallèlement au second axe de rotation (13).

6. Dispositif selon l'une quelconque des revendications précédentes 1 à 5, caractérisé en ce qu'un photodétecteur (23) est disposé dans la zone du cône de balayage du faisceau lumineux d'éclairage (16) de manière qu'il puisse être parcouru une fois au cours de chaque balayage dans les deux dimensions par le faisceau lumineux d'éclairage et en ce que la coordination dans le temps et dans l'espace des signaux reçus par le détecteur (22) avec la surface balayée (17) est calculée à partir du signal produit par le photodétecteur (23).

7. Dispositif selon l'une quelconque des revendications précédentes 1 à 5, caractérisé en ce que sont prévus deux détecteurs d'angle par lesquels peut être déterminée dans tout point dans le temps du balayage dans les deux directions la coordination dans le temps et dans l'espace des signaux reçus par le détecteur (22) avec la surface balayée (17).

8. Dispositif selon l'une quelconque des revendications précédentes, caractérisé en ce que le régulateur galvanométrique (11) est un régulateur galvanométrique à résonance.
